# EUROPÄISCHE PATENTSCHRIFT

(11) **EP 1 829 672 B1**
(45) Veröffentlichungstag und Bekanntmachung des Hinweises auf die Patenterteilung: **03.12.2008**
(21) Anmeldenummer: 07101853.5
(22) Anmeldetag: 07.02.2007
(51) Int. Cl.: B29D 30/06, B29C 33/42, B60C 11/12

(54) **Form zur Ausformung der Profilierung des Laufstreifens eines Fahrzeugluftreifens und Fahrzeugluftreifen**
Mould for moulding the profile of the tread of a vehicle pneumatic tyre and vehicle pneumatic tyre
Moule destiné à la formation du profilage de la bande de roulement d'un pneu de véhicule et pneu de véhicule

(30) Priorität: 04.03.2006 DE 102006010050
(43) Veröffentlichungstag der Anmeldung: 05.09.2007
(73) Patentinhaber: Continental Aktiengesellschaft, 30165 Hannover (DE)
(72) Erfinder: Vennebörger, Martin, 30625 Hannover (DE); Schlittenhard, Jan, 30900 Wedemark (DE)

(56) Entgegenhaltungen:
- JP-A- 4 215 507
- JP-A- 8 025 365
- JP-A- 8 025 367
- JP-A- 2005 212 177
- US-A- 3 067 506

## Beschreibung

Die Erfindung betrifft eine Form mit Formteilen zur Ausformung der Profilierung des Laufstreifens eines Fahrzeugluftreifens mit Feineinschnitten mittels in den Formteilen verankerter Lamellenbleche, welche zumindest zwei aufeinander gefaltete Blechabschnitte aufweisen, welche eine übereinstimmende radiale Erstreckung bis zur Forminnenseite aufweisen und mittels Befestigungsabschnitten an ihren freien Endbereichen in der Form verankert sind. Die Erfindung betrifft ferner einen in einer derartigen Form vulkanisierten Fahrzeugluftreifen.

Feineinschnitten im Laufflächenprofil von Fahrzeugluftreifen, insbesondere von Reifen, die für den Einsatz unter winterlichen Fahrbedingungen geeignet sein sollen, kommt eine besondere Bedeutung zu. Feineinschnitte stellen insbesondere Griffkanten zur Verfügung, die für einen guten Griff des Reifens auf schneeigen oder eisigen Fahrbahnen von Bedeutung sind. Dabei kommt es bei der Ausführung von Feineinschnitten auch darauf an, die Biegesteifigkeit der Profilelemente, beispielsweise der Blöcke, derart zu beeinflussen und einzustellen, dass der Reifen auch eine gute Traktion auf winterlichen Fahrbahnen und ein gutes Bremsvermögen sowohl auf winterlichen als auch auf trockenen und nassen Fahrbahnen aufweist.

Feineinschnitte werden üblicherweise dadurch erzeugt, dass Lamellenbleche in die Vulkanisationsform eingegossen oder in der Vulkanisationsform in speziell eingefrästen Schlitzen verankert werden, sodass sich die Lamellenbleche von der Formoberfläche in den Raum zur Aufnahme und Ausformung des Reifenrohlings hinein erstrecken. Der Reifenrohling wird üblicherweise zur Ausformung des Profils mittels eines Heizbalges gegen die mit Lamellenblechen auf diese Weise bestückte Formoberfläche gepresst, wodurch die Lauffläche des Fahrzeugluftreifens entsprechend der Profilierung der Formoberfläche profiliert wird. Die Lamellenbleche erzeugen hierbei schmale Einschnitte im Laufflächenprofil des Fahrzeugluftreifens.

Die Erzeugung von sehr schmalen Einschnitten mit Lamellenblechen mit einer Dicke von weniger als 0,4 mm erfordert die Herstellung von entsprechend gefrästen schmalen Schlitzen in der Vulkanisationsform, ist daher mit einem höheren Aufwand verbunden und nur begrenzt möglich.

Eine Vulkanisationsform bzw. ein Lamellenblech der eingangs genannten Art ist beispielsweise aus der JP-A-8025367 bekannt. Das Lamellenblech besteht aus doppeltem Blech und soll dadurch eine besonders gute Entformbarkeit aus dem fertig vulkanisierten Reifen sicherstellen. Weitere, aus doppeltem Blech gefertigte Lamellenbleche sind aus der JP-A-4215507 und der JP-A-8025365 bekannt. Aus der JP-A-2005212177 ist ein Lamellenblech bekannt, welches einen kurzen, umgefalteten Blechabschnitt aufweist, der gemeinsam mit dem anschließenden Endabschnitt des Lamellenbleches in der Vulkanisationsform verankert wird, um die Haltekraft des Lamellenbleches in der Form zu verbessern. Die US-A-3,067,506 offenbart die Herstellung von Lamellenblechen für speziell gestaltete, beispielsweise im Laufstreifen X-förmig angeordnete Einschnitte. Die Lamellenbleche werden aus einem einzigen Blechstück durch Falten hergestellt, wobei sich aufeinandergefaltete Blechabschnitte ergeben, die sich jedoch sämtlich im Verankerungsbereich des Lamellenbleches in der Vulkanisationsform befinden.

Aus der DE 3531047 A1 ist es bekannt, Feineinschnitte mit in radialer Richtung des Fahrzeugluftreifens veränderter Dicke vorzusehen. Diese werden mittels gegossener Lamelleneinsätze erzeugt. Das Gießen von Lamelleneinsätzen ist aufwendig und kostenintensiv und zur Erzeugung von schmalen Einschnitten mit Einschnittdicken von weniger als 0,6 mm schwierig.

Aus der US 2003/0101851 A1 ist es bekannt, Lamellenbleche aufeinander zu kleben oder zu schweißen, um auf diese Weise Lamellenbleche mit unterschiedlichen Dicken über ihre Erstreckung und daher entsprechend Feineinschnitte mit variierender Breite zu erzeugen. Diese Art der Herstellung von Lamellenblechen ist besonders aufwendig. Schweiß- bzw. Klebespuren müssen restlos beseitig, eventuelle Verformungen beim Schweißen bzw. Kleben verhindert und, besonders aufwendig, im Anschluss egalisiert werden. Bei sehr dünnen Lamellenblechen zur Erzielung von sehr dünnen Einschnitten mit Breiten von weniger als 0,4 mm wird dies durch die erhöhte Gefahr der Verformbarkeit des Materials zusätzlich erschwert.

Der Erfindung liegt die Aufgabe zugrunde, in einfacher Weise die Herstellung von Feineinschnitten in Lauffläche von Fahrzeugluftreifen zu ermöglichen, welche Einschnitte eine gezielte Beeinflussung der Biegesteifigkeit der Profilelemente im Laufstreifen des Reifens gestatten sollen und welche eine variierende Einschnittbreite aufweisen.

Gelöst wird die gestellte Aufgabe erfindungsgemäß dadurch, dass die aufeinander gefalteten Abschnitte unterschiedlich große Flächen aufweisen.

Durch einfaches Falten oder Biegen von Lamellenblechen bzw. Abschnitten derselben weisen diese im aufeinander gefalteten Bereich eine doppelte Blechdicke auf. In Bereich(en), wo kein doppeltes Lamellenblech vorliegt, wird bzw. werden im Laufstreifen des Reifens schmale Einschnittabschnitte erzeugt. Dabei ist es möglich, den Feineinschnitt im Reifen durch die entsprechende Gestaltung von Lamellenblechabschnitten sehr variabel hinsichtlich der Einschnittbreite zu gestalten. Dadurch lassen sich mit erfindungsgemäßen Lamellenblechen im Reifen Feineinschnitte herstellen, die in erwünschter Weise die Biegesteifigkeit der Profilelemente, insbesondere der Profilblöcke, beeinflussen. Beispielsweise sind Einschnitte erzeugbar, die an ihren Einmündungsbereichen zu Umfangsnuten schmäler oder dicker ausgeführt sind als in ihrem mittleren Abschnitt.

Bei einer bevorzugten, einfachen Ausführung der Erfindung sind die aufeinander gefalteten Abschnitte zumindest abschnittsweise deckungsgleich ausgeführt, wobei vorzugsweise der eine dieser Abschnitte mit zumindest einem weiteren Abschnitt die Fläche eines anderen, auf den ersten gefalteten Abschnittes überragt. Der mit einem derartigen Lamellenblech erzeugte Einschnitt im Laufstreifen eines Reifens kann somit in einem definierten Bereich bzw. Abschnitt breiter ausgeführt sein als in anderen definierten Abschnitten.

Bei einer weiteren bevorzugten Ausführungsform der Erfindung weisen die aufeinander gefalteten Abschnitte und der bzw. die diese überragende(n) Abschnitt(e) unterschiedliche radiale und insbesondere auch unterschiedliche axiale Erstreckungen auf. Die gewählten Abmessungen für diese Abschnitte gestatten es, die Biegesteifigkeit der Profilelemente im Laufstreifen ganz gezielt zu beeinflussen.

Um Einschnitte im Reifen zu erzeugen, die gleichzeitig die Performance des Reifens auf Schnee und jene auf trockenen Fahrbahnen verbessern, werden Lamellenbleche mit drei oder mehr aufeinander gefalteten Blechabschnitten vorgesehen. Je nach Anordnung und Dimension der aufeinander gefalteten Blechabschnitte lassen sich hinsichtlich ihrer Breite sehr variabel ausgeführte Einschnitte im Reifen erzeugen. Besonders vorteilhaft ist es, Lamellenbleche zu verwenden, welche zwei oder mehr Bereiche mit zumindest zwei aufeinander gefalteten Blechabschnitten aufweisen. Auf diese Weise lassen sich Einschnitte erzeugen, die Abschnitte mit variierenden Breiten aufweisen.

Um solche Einschnitte auszubilden, weisen die noch ungefalteten Lamellenbleche zumindest zwei Faltlinien für Blechabschnitte auf. Diese Faltlinien verlaufen bevorzugt parallel zueinander. Dies erleichtert eine definierte Ausführung der Lamellenblechabschnitte und deren Faltung.

Von besonderem Vorteil ist bei der Erfindung, dass sich die Steifigkeit der Profilelemente bei fortschreitendem Laufstreifenabrieb ebenfalls gezielt beeinflussen lässt, insbesondere dadurch, dass die Lamellenbleche, welche diese Einschnitte erzeugen, derart ausgeführt werden, dass zumindest einer der aufeinander gefalteten Abschnitte vor der Faltung durch Prägung oder Stanzung strukturiert wird. Durch eine Prägung kann beispielsweise zumindest eine örtliche Vertiefung, Nut oder dergleichen gebildet werden, durch Stanzung können Löcher und/oder Ausnehmungen erstellt werden.

Auch die gegenseitige Anordnung der Vertiefungen, Nuten, Löcher und Ausnehmungen in den zusammengefalteten Abschnitten ist von Bedeutung für die Wirkung der gebildeten Einschnitte auf die Steifigkeit des Profilelementes bei vorschreitendem Abrieb. So kann die gegenseitige Anordnung derart erfolgen, dass Vertiefungen oder Nuten zwischen sich Erweiterungen einschließen, die in den gebildeten Einschnitten ebenfalls Erweiterungen ergeben. Alternativ können Vertiefungen oder Nuten in den beiden aufeinander gefalteten Abschnitten gemeinsam Einbuchtungen oder Biegungen im Verlauf des Lamellenblechs ergeben.

Erfindungsgemäße Lamellenbleche lassen sich bei aufeinander gefalteten Abschnitten zusätzlich prägen, insbesondere können auf diese Weise Lamellenbleche mit zick-zack- oder wellenförmigen Erhebungen und Vertiefungen erzeugt werden, die im fertigen Reifen in Draufsicht wellen- bzw. zick-zackförmig verlaufende Einschnitte ergeben.

Die Erfindung betrifft schließlich einen Fahrzeugluftreifen, welcher in einer Form und mit erfindungsgemäß ausgeführten Lamellenblechen vulkanisiert worden ist.

Weitere Merkmale, Vorteile und Einzelheiten der Erfindung werden anhand der Zeichnung, die schematisch mehrere Ausführungsbeispiele darstellt, näher beschrieben. Dabei zeigen
Fig. 1a bis Fig. 1c eine Ausführungsform eines Lamellenblechs, Fig. 1a eine Ansicht des ungefalteten Lamellenblechs, Fig. 1b eine Ansicht des gefalteten Lamellenblechs, Fig. 1c eine Draufsicht auf das gefaltete Lamellenblech,
Fig. 2a und Fig. 2b Ansichten einer weiteren Ausführungsform eines Lamellenblechs, Fig. 2a das ungefaltete Lamellenblech, Fig. 2b einen Längsschnitt des gefalteten Lamellenblechs,
Fig. 3a bis Fig. 3c Ansichten einer weiteren Ausführungsform eines Lamellenblechs, Fig. 3a das ungefaltete Lamellenblech, Fig. 3b eine Draufsicht auf das ungefaltete Lamellenblech, Fig. 3c eine Draufsicht auf das gefaltete Lamellenblech,
Fig. 4a bis Fig. 4c Ansichten einer weiteren Ausführungsform, Fig. 4a das ungefaltete Lamellenblech, Fig. 4b und Fig. 4c Längsschnitte durch das gefaltete Lamellenblech,
Fig. 5a und Fig. 5b Ansichten einer anderen Ausführungsform, Fig. 5a das ungefaltete Lamellenblech, Fig. 5b eine Draufsicht auf das gefaltete Lamellenblech,
Fig. 6a bis Fig. 6c Ansichten einer weiteren Ausführungsform eines Lamellenblechs, Fig. 6a das ungefaltete Lamellenblech, Fig. 6b und Fig. 6c Längsschnitte durch das gefaltete Lamellenblech,
Fig. 7a und Fig. 7b eine weitere Ausführungsvariante eines Lamellenblechs, Fig. 7a das ungefaltete Lamellenblech, Fig. 7b einen Längsschnitt durch das gefaltete Lamellenblech,
Fig. 8a und Fig. 8b eine andere Ausführungsvariante eines Lamellenblechs, Fig. 8a das ungefaltete Lamellenblech, Fig. 8b eine Längsschnitt durch das gefaltete Lamellenblech,
Fig. 9a bis 9g Ansichten einer weiteren Ausführungsvariante eines Lamellenblechs, Fig. 9a das ungefaltete Lamellenblech, Fig. 9b und 9c Ansichten des Lamellenblechs nach Durchführung einer ersten Faltung, Fig. 9d bis 9g Ansichten des komplett gefalteten Lamellenblechs,
Fig. 10a bis 10f ebenfalls Ansichten einer Ausführungsvariante eines Lamellenblechs, Fig. 10a das ungefaltete Lamellenblech und Fig. 10b bis 10c Ansichten des komplett gefalteten Lamellenblechs.

Lamellenbleche dienen zur Herstellung von Feineinschnitten in der Lauffläche eines Fahrzeugluftreifens und werden zu diesem Zweck in eingefrästen Schlitzen von Laufflächensegmenten einer Vulkanisationsform eingesetzt und befestigt. In den Zeichnungsfiguren sind Bestandteile der Vulkanisationsform nicht dargestellt. Mit unterbrochenen Linien sind jene Abschnitte der Lamellenbleche angedeutet, mit welchen diese in der Vulkanisationsform verankert werden.

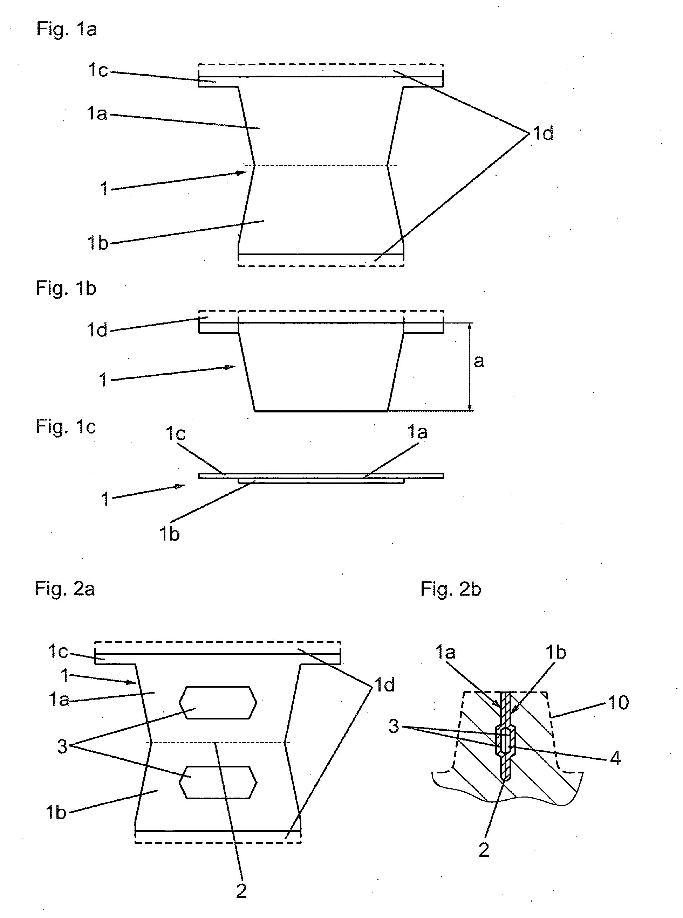

Fig. 1a bis 1c zeigen eine Basisvariante eines erfindungsgemäßen Lamellenblechs 1, wobei Fig. 1b und 1c jeweils das fertige, zum Einsetzen in die Vulkanisationsform vorgesehene Lamellenblech 1 zeigen. Das Lamellenblech 1 wird aus einem ebenen, gestanzten Blech 1, welches in Fig. 1a gezeigt ist, durch Falten bzw. Biegen um eine Faltlinie 2 hergestellt. Das ungefaltete Lamellenblech 1 weist beidseitig der Faltlinie 2 zwei nahezu deckungsgleich ausgeführte Abschnitte 1a, 1b in der Gestalt von gleichschenkeligen Trapezen auf. Der Abschnitt 1a weist an seinem äußeren Endbereich zwei langgestreckt rechteckförmige Ansätze 1c auf, wobei hier einer der Befestigungsabschnitte 1d des Lamellenblechs 1 anschließt. Fig. 1b und 1c zeigen das gefaltete Lamellenblech 1, die beiden Abschnitte 1a, 1b sind deckungsgleich aufeinander gefaltet und in Kontakt miteinander. Das Lamellenblech 1 wird mit seinen der Faltlinie 2 gegenüber liegenden Befestigungsabschnitten 1d in der Vulkanisationsform verankert, beispielsweise in den gefrästen Schlitz der Vulkanisationsform eingesetzt und befestigt oder bei Gussformen eingegossen. Der Abstand a in Fig. 1b entspricht der maximalen Tiefe des in der Lauffläche des zu vulkanisierenden Reifens entstehenden Einschnittes. Zur Ausformung und Vulkanisation wird der noch rohe Reifen in die Vulkanisationsform eingesetzt und mittels eines Heizbalges in bekannter Weise radial expandiert und dabei gegen die Vulkanisationsform gepresst, so dass das Kautschukmaterial des Laufstreifens in die Lamellenbleche und die weiteren, nicht gezeigten Profilierungen der Vulkanisationsform gedrückt wird.

Die seitlichen Ansätze 1c bilden im Laufstreifen des Reifens seichte und schmale Einschnittabschnitte, mit welchen der betreffende Einschnitt bevorzugt in eine Rille oder Nut einmündet. Die von den seitlichen Ansätzen 1c gebildeten Einschnittabschnitte sind nur halb so breit wie der mittlere Abschnitt des Einschnittes, welcher durch ein doppeltes Lamellenblech gebildet wird. Die seitlichen Abschnitte 1c können in beliebiger Höhe erstellt sein, insbesondere kann vorgesehen sein, dass sie mit dem Abschnitt 1a eine einheitliche im Wesentlichen rechteckige bzw. trapezförmige Fläche bilden. In diesem Fall reichen auch die schmalen Abschnitte der ausgeformten Einschnitte bis auf die maximal vorgesehene Einschnitttiefe. Das gefaltete Lamellenblech 1 kann zusätzlich geprägt werden, sodass beispielweise abwechselnd Erhebungen und Vertiefungen gebildet werden, die im Laufstreifen in Draufsicht zick-zack-förmig verlaufende Einschnitte ergeben.

Die Zeichnungsfiguren 2a, 2b, 3a, 3b, 4a bis 4c, 5a, 5b, 6a bis 6c, 7a, 7b sowie 8a und 8b zeigen Varianten der in Fig. 1a bis 1c gezeigten Ausführungsform eines Lamellenblechs 1. Dabei ist jeweils die Grundform des Lamellenblechs 1 gleich gelassen und es weist daher jedes Lamellenblech 1 deckungsgleich ausgeführte und in Kontakt stehende trapezförmige Abschnitte 1a, 1b und zwei seitliche Abschnitte 1c auf, die an dem einen Abschnitt 1a vorgesehen sind. Die Lamellenbleche 1 bilden daher Einschnitte, die im mittleren Bereich ihre größte Breite und ihre maximale Tiefe aufweisen und in den seitlichen Bereichen schmal und seicht ausgeführt sind. Die Befestigungsabschnitte 1d zum Verankern der fertig gebogenen Lamellenbleche 1 in der Vulkanisationsform sind jeweils mit unterbrochenen Linien angedeutet.

Fig. 2a und 2b zeigen eine Ausführungsform, bei der in jedem Lamellenblechabschnitt 1a, 1b etwa mittig eine Vertiefung 3, die hier in der Form eines Sechseckes ausgeführt ist, eingeprägt ist. Die beiden Vertiefungen 3 werden bei ungefaltetem Lamellenblech 1 in übereinstimmender Richtung erstellt, sodass nach dem Falten entlang der Faltlinie 2 und dem Aufeinanderfügen der beiden Blechabschnitte 1a, 1b die Vertiefungen 3 gemeinsam eine Erweiterung 4 umschließen, wie es Fig. 2b im Längsschnitt zeigt. In Fig. 2b ist auch die Außenkontur eines Profilblockes 10 der Lauffläche eines Reifens angedeutet, sodass ersichtlich ist, dass die Außenfläche des Lamellenblechs 1 die inneren Begrenzungsflächen des geformten Einschnittes bilden.

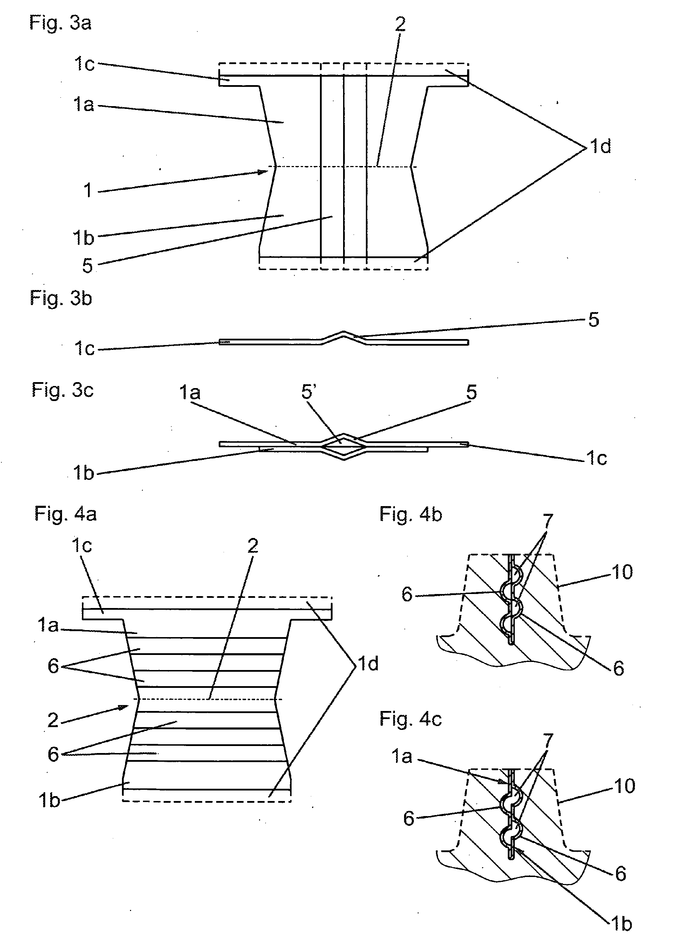

Bei der in Fig. 3a bis 3c gezeigten Ausführungsvariante eines Lamellenblechs 1 ist das Lamellenblech 1 im ungefalteten Zustand vorgeprägt, hier durch eine über beide Abschnitte 1a, 1b des noch ungefalteten Blechs 1 durchgehend verlaufende dreieckförmige Nut 5. Die Draufsicht auf das ungefaltete Lamellenblech 1 in Fig. 3c zeigt die Nut 5 von oben. Nach dem Biegen bzw. Falten des Lamellenblechs 1 hat dieses in Draufsicht die in Fig. 3b gezeigte Form. Die Abschnitte 1a und 1b des Lamellenblechs 1 schließen im zusammengefalteten Zustand eine in Draufsicht parallelogramm- bzw. rombenförmigen Erweiterung 11 ein, durch welche im Einschnitt im Reifen ebenfalls eine Erweiterung erzeugt wird, die bis zur Peripherie des Laufstreifens verläuft.

Fig. 4a bis 4c zeigen eine weitere Ausführungsform der Erfindung, bei der das ungefaltete Lamellenblech 1 auf jedem Blechabschnitt 1a, 1b unter einem kleinen spitzen Winkel zur Faltlinie 2 jeweils mit zwei Vertiefungen 6, erzeugt durch Einprägen, versehen wird. Die Vertiefungen 6 in dem einen Blechabschnitt 1a sind, bezogen auf die Faltlinie 2a, symmetrisch zu den Vertiefungen 6 im anderen Blechabschnitt 1b erstellt, sodass das fertige, gefaltete Lamellenblech 1 die beispielweise in Fig. 4b und 4c gezeigte gegenseitige Anordnung von Erweiterungen 7 aufweist. Im fertigen Reifen bilden diese Vertiefungen 6 bzw. die durch sie entstehenden Erweiterungen 7 entsprechende Erweiterungen im geformten Einschnitt. In Fig. 4b und 4c wird in durch den jeweils angedeuteten Profilbock 10 veranschaulicht, dass die Außenkontur des jeweiligen Lamellenblechs 1 der Wandkontur des gebildeten Einschnittes entspricht.

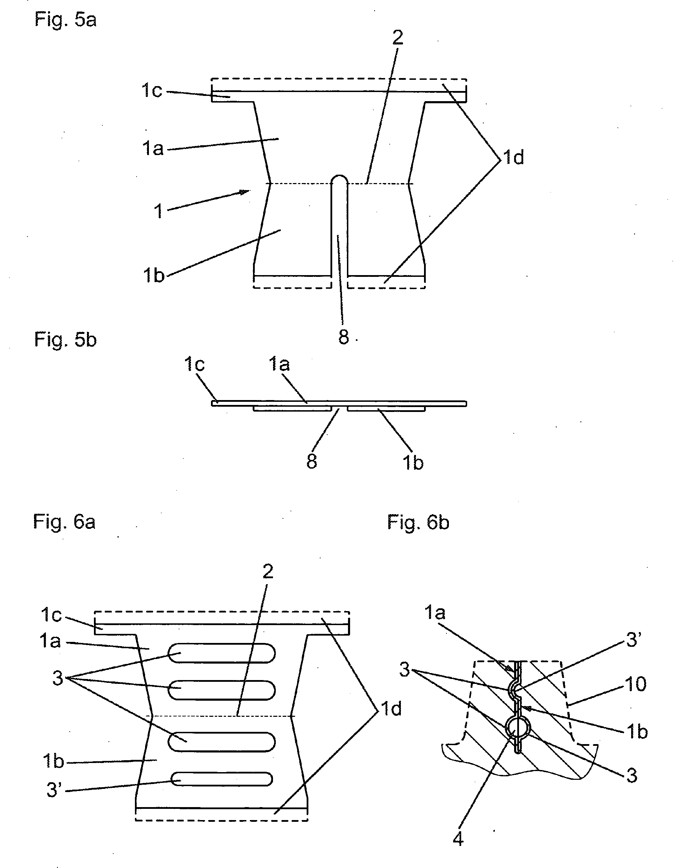

Bei der in Fig. 5a und 5b gezeigten Ausführungsvariante ist der eine Blechabschnitt 1b mittig und senkrecht zur Faltlinie 2 ausgenommen, sodass über den Verlauf der Ausnehmung 8 der Abschnitt 1b unterbrochen ist. Im gefalteten Zustand weist daher das Lamellenblech 1 an der Stelle der Ausnehmung 8 eine Unterbrechung der doppelten Blechstärke auf, sodass der geformte Einschnitt an dieser Stelle ebenfalls entsprechend schmäler ausgeführt ist. Fig. 5b verdeutlicht dies anhand einer Draufsicht auf das gefaltete Lamellenblech 1.

Fig. 6a bis Fig. 6c zeigen eine Ausführungsvariante, bei der in dem einen Lamellenblechabschnitt 1a eine Anzahl von Löchern 9 ausgestanzt ist. Die Löcher 9 können unterschiedliche Formen und Abmessungen aufweisen, bei der dargestellten Ausführungsform sind drei kreisrunde Löcher 9 und ein längliches Loch 9 vorgesehen. Fig. 6b zeigt einen Längsschnitt durch das fertig gefaltete Lamellenblech 1 entlang der Linie A-A der Fig. 6a, Fig. 6c zeigt einen Schnitt entlang der Linie B-B der Fig. 6a, wobei in Fig. 6b und 6c jeweils auch ein Profilblock 10 angedeutet ist. Im Bereich der Löcher 9 sind somit die geformten Einschnitte schmäler, da hier lokal Gummimaterial eintreten kann. Mit zunehmendem Abrieb des Profilblockes 10 bzw. Laufstreifens kommen daher unterschiedliche Charakteristiken des Einschnittes im Profilblock 10 zum Tragen. Die breiteren Abschnitte des Einschnittes machen den Block 10 weicher, in den Bereichen mit Löchern 9 wird der Block 10 versteift.

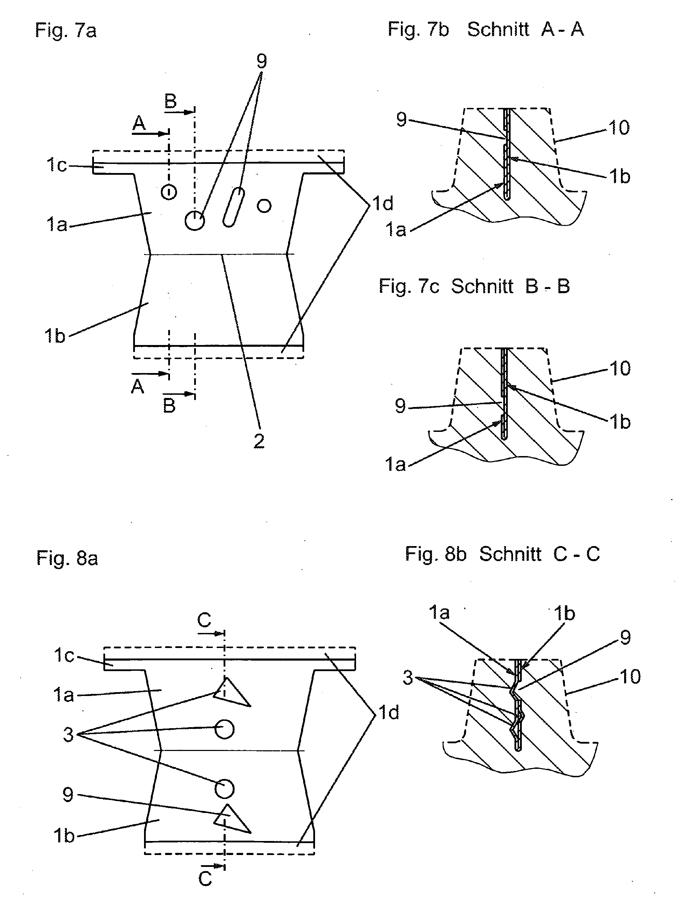

Eine Kombination von Löchern 9 und Vertiefungen 3 in beiden Abschnitten 1a, 1b des Lamellenblechs 1 zeigen Fig. 7a und 7b. Jeder Abschnitt 1a, 1b ist jeweils mit einer Vertiefung 3 und jeweils einem Loch 9 versehen, wobei das dreieckförmige Loch 9 und die dreieckförmige Vertiefung 3 in den Abschnitten 1a, 1b korrespondieren, derart, dass, wie es Fig. 7b zeigt, bei zusammengefaltetem Lamellenblech 1 die dreieckförmige Vertiefung 3 mit dem dreieckförmigen Loch 9 aufeinander trifft und eine Biegung im Einschnittverlauf erzeugt.

Eine weitere Möglichkeit, die Steifigkeit eines Profilblocks durch eine besondere Einschnittgestaltung zu beeinflussen, zeigen Fig. 8a und 8b. Das ungefaltete Lamellenblech 1 weist in dem einen Lamellenblechabschnitt 1a zwei Vertiefungen 3 auf, die in übereinstimmender Richtung ausgeführt sind, im zweiten Lamellenblechabschnitt 1b sind eine weitere gleichermaßen orientierte Vertiefung 3 und eine entgegengesetzt ausgeführte Vertiefung 3 versehen. Fig. 8b zeigt das zusammengefaltete Lamellenblech 1 sowie einen angedeuteten Profilblock 10, wobei hier zu erkennen ist, dass zwei Vertiefungen 3 eine örtliche Erweiterung 4 im geformten Einschnitt, die beiden weiteren Vertiefungen 3 im Vertikalverlauf des Einschnittes eine Biegung ergeben.

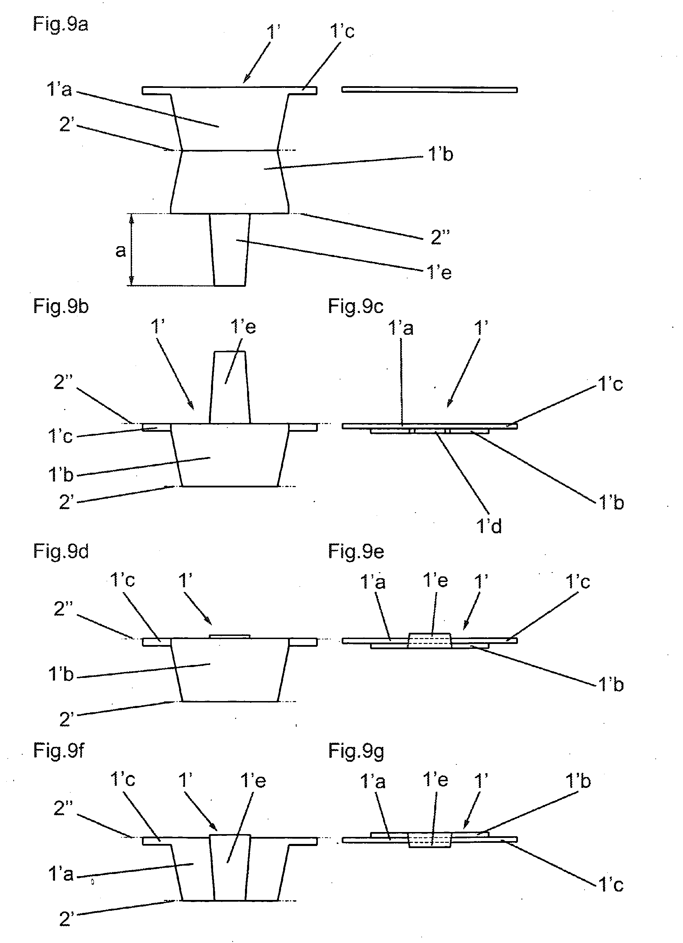

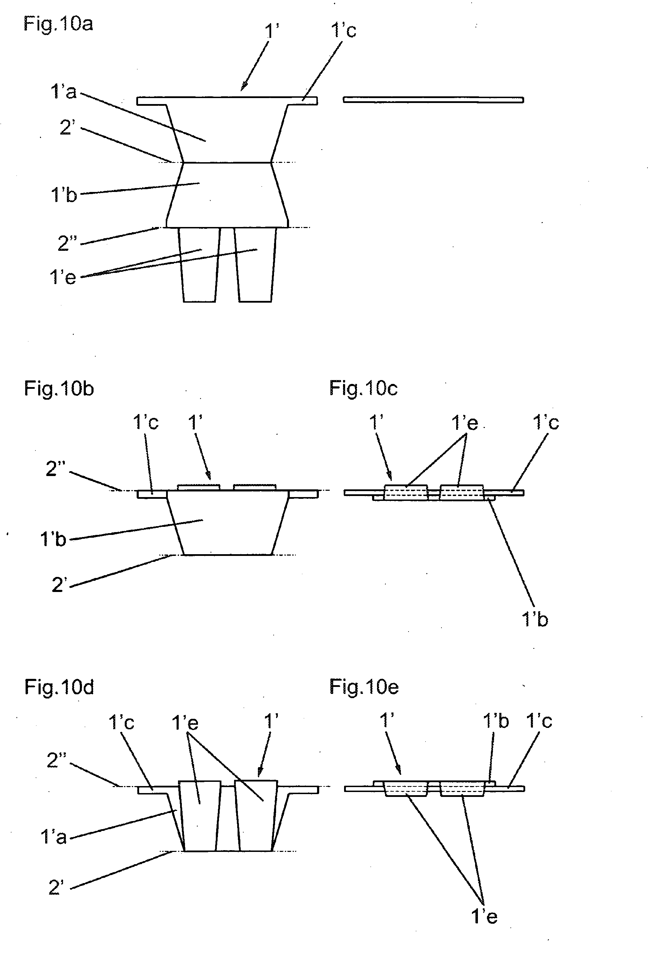

Bei den in den Figuren 9a bis 9g und 10a bis 10f gezeigten Ausführungsvarianten der Erfindung weist das Lamellenblech 1' analog zu den vorhergehenden Ausführungsvarianten zwei deckungsgleich ausgeführte und nach dem Falten miteinander in Kontakt stehende trapezförmige Abschnitte 1'a, 1'b auf sowie zwei seitliche Abschnitte 1'a, die am Abschnitt 1'a vorgesehen sind, auf.

Bei der in Fig. 9a bis 9g gezeigten Ausführungsvariante weist das Lamellenblech 1', am Abschnitt 1'b mittig angesetzt einen weiteren Abschnitt 1'e auf, dessen trapezförmige Grundfläche kleiner ist als die Grundfläche der Abschnitte 1'a und 1'b, bei der dargestellten Ausführungsform etwa ein Drittel der Fläche der Abschnitte 1'a und 1'b beträgt. Die Abmessung a des trapezförmigen Abschnittes 1'e im ungefalteten Zustand wird bei der gezeigten Ausführung so gewählt, dass nach der Faltung (Fig. 9e bis 9g) die Höhe des Abschnitts 1'e und mit den Höhen der Abschnitte 1'a und 1'b übereinstimmen. Die Abschnitte 1'a und 1'b sind um eine Faltlinie 2' aufeinander faltbar, der Abschnitt 1'e ist um eine weitere Faltlinie 2", die parallel zur Faltlinie 2'und auch entlang der freien Bereiche der Randkante des Abschnittes 1'b verläuft, auf den Abschnitt 1'a faltbar. Fig. 9b und 9c zeigen das Lamellenblech 1' nach dem Durchführen des Faltvorganges um die Faltlinie 2', Fig. 9b in Seitenansicht, Fig. 9c in Draufsicht. Fig. 9d bis 9g zeigen das Lamellenblech 1' nach dem Durchführen des zweiten Faltvorganges, dem Falten des Abschnittes 1'e um die Faltlinie 2''. Fig. 9d und 9e zeigen analog zu Fig. 9b und 9c Ansichten von der einen Seite, Fig. 9f und 9g Ansichten von der anderen Seite des Lamellenblechs 1', insbesondere ist in Fig. 9f der auf den Abschnitt 1'a gefaltete und mit diesem in Kontakt stehende Abschnitt 1'e erkennbar. Durch ein derart ausgeführtes Lamellenblech 1' wird im fertigen Reifen ein Einschnitt erzeugt, der drei Abschnitte unterschiedlicher Breite aufweist, zwei seitliche Randabschnitte, die die schmälsten Abschnitte sind, an diese anschließende breitere Abschnitte und einen in der Einschnittmitte befindlichen Abschnitt, welche am breitesten ist, entsprechend den Blechstärken der drei Abschnitte 1'a, 1'b und 1'e.

Fig. 10a bis 10f zeigen eine Abwandlung der in Fig. 9a bis 9g gezeigten Ausführungsform. Anstelle eines einzigen Abschnittes 1'e sind bei dieser Ausführungsvariante zwei Abschnitte 1'e vorgesehen, die um die zweite Faltlinie 2" faltbar sind. Die beiden Abschnitte 1'e sind bei dieser Ausführungsvariante gleich groß ausgeführt und symmetrisch am Abschnitt 1'b angesetzt. Fig. 10b bis 10f zeigen Ansichten des Lamellenbleches 1' nach Komplettierung der Faltvorgänge, wobei Fig. 10b und 10d seitliche Ansichten und Fig. 10c und 10f Draufsichten sind. Durch ein derart ausgeführtes Lamellenblech 1' wird im fertigen Reifen ein Einschnitt erzeugt, welcher Abschnitte mit drei unterschiedlichen Breiten und in bestimmter Anordnung, entsprechend den Lamellenblechstärken wie sie in Fig. 10c und 10f ersichtlich sind, aufweist.

Die Befestigungsabschnitte zum Verankern der fertig gefalteten Lamellenbleche 1' in der Vulkanisationsform sind nicht dargestellt, können jedoch analog zu den vorhergehenden Ausführungsvarianten - mit Unterbrechungen bei den Abschnitten 1'e - ausgebildet sein.

Die Lamellenbleche 1' gemäß Fig. 9d bis 9g und 10a bis 10f können nachträglich geprägt werden, um beispielsweise in Draufsicht Zickzack-förmig verlaufende Einschnitte in Reifen zu erzeugen.

Auf analoge Weise ist es möglich, Lamellenbleche herzustellen, die mehr als drei aufeinander gefaltete Abschnitte aufweisen.

Die einfache Dicke der Lamellenbleche wird zwischen 0,1 mm und 1 mm, insbesondere zwischen 0,3 mm und 0,6 mm, gewählt. Die Einschnitte im Reifen weisen daher Abschnitte dieser Breite und Abschnitte der doppelten Breite auf.

Es ist eine Vielzahl von weiteren Variationen möglich. Insbesondere können Maßnahmen und Merkmale aus den beschriebenen und dargestellten Ausführungsformen auf vielfältige Weise miteinander kombiniert werden. Darüber hinaus können die Anzahl und die Form der Vertiefungen, Löcher, Nuten und dergleichen beliebig variiert werden.

### Bezugszeichenliste

- 1: Lamellenblech
- 1': Lamellenblech
- 1a: Abschnitt
- 1'a: Abschnitt
- 1b: Abschnitt
- 1'b: Abschnitt
- 1c: Ansatz
- 1'c: Ansatz
- 1'e: Abschnitt
- 1d: Befestigungsabschnitt
- 2: Faltfinie
- 2',2'': Faltlinie
- 3: Vertiefung
- 4: Erweiterung
- 5: Nut
- 6: Vertiefung
- 7: Erweiterungen
- 8: Ausnehmung
- 9: Loch
- 10: Profilblock
- 11: Erweiterung

## Patentansprüche

1. Form mit Formteilen zur Ausformung der Profilierung des Laufstreifens eines Fahrzeugluftreifens mit Feineinschnitten mittels in den Formteilen verankerter Lamellenbleche (1,1'), welche zumindest zwei aufeinander gefaltete Blechabschnitte (1a, 1b, 1'a, 1'b, 1'e) aufweisen, welche eine übereinstimmende radiale Erstreckung bis zur Forminnenseite aufweisen und mittels Befestigungsabschnitten (1d) an ihren freien Endbereichen in der Form verankert sind,
**dadurch gekennzeichnet,**
**dass** die aufeinander gefalteten Abschnitte (1a, 1b, 1'a, 1'b, 1'e) unterschiedlich große Flächen aufweisen.

2. Form nach Anspruch 1, **dadurch gekennzeichnet, dass** die aufeinander gefalteten Abschnitte (1a, 1b) zumindest abschnittsweise deckungsgleich ausgeführt sind.

3. Form nach Anspruche 1 oder 2, **dadurch gekennzeichnet, dass** der eine Abschnitt (1a, 1'a) mit zumindest einem weiteren Abschnitt (1c, 1'c) die Fläche eines anderen, auf den ersten Abschnitt (1a, 1'a) gefalteten Abschnittes (1b, 1'b) überragt.

4. Form nach Anspruch 3, **dadurch gekennzeichnet, dass** die aufeinander gefalteten Abschnitte (1a, 1b, 1'a, 1'b, 1'e) und der bzw. die diese überragende(n) Abschnitt(e) (1c, 1'c) unterschiedliche radiale und insbesondere auch unterschiedliche axiale Erstreckungen aufweisen.

5. Form nach einem der Ansprüche 1 bis 4, **dadurch gekennzeichnet, dass** Lamellenbleche (1') mit drei oder mehr aufeinander gefalteten Blechabschnitten (1'a, 1'b, 1'e) vorgesehen sind.

6. Form nach einem der Ansprüche 1 bis 5, **dadurch gekennzeichnet, dass** Lamellenbleche (1') vorgesehen sind, welche zwei oder mehr Bereiche mit zwei oder mehr aufeinander gefalteten Blechabschnitten (1'a, 1'b, 1'e) aufweisen.

7. Form nach Anspruch 5 oder 6, **dadurch gekennzeichnet, dass** die Faltlinien (2', 2") der Blechabschnitte (1'a, 1'b, 1'e) parallel zueinander verlaufen.

8. Form nach einem der Ansprüche 1 bis 7, **dadurch gekennzeichnet, dass** zumindest der eine der aufeinander gefalteten Abschnitte (1a, 1b) vor der Faltung durch Prägung oder Stanzung strukturiert worden ist.

9. Form nach Anspruch 8, **dadurch gekennzeichnet, dass** die Prägung in zumindest einer örtlichen Vertiefung (3, 6) oder zumindest einer Nut (5) besteht.

10. Form nach Anspruch 8, **dadurch gekennzeichnet, dass** zumindest einer der aufeinander gefalteten Abschnitte (1a, 1b) mit zumindest einem Loch (9) oder einer Ausnehmung (8) versehen worden ist.

11. Form nach einem der Ansprüche 8 bis 10, **dadurch gekennzeichnet, dass** Vertiefungen (3, 6) oder Nuten (5) in den beiden aufeinander gefalteten Abschnitten zwischen sich Erweiterungen (4, 7, 11) einschließen.

12. Form nach einem der Ansprüche 8 bis 10, **dadurch gekennzeichnet, dass** Vertiefungen (3, 3') oder Nuten in den beiden aufeinander gefalteten Abschnitten (1a, 1b) gemeinsam Einbuchtungen oder Biegungen im Verlauf des Lamellenblechs (1) ergeben.

13. Form nach einem der Ansprüche 1 bis 7 oder 10, **dadurch gekennzeichnet, dass** das Lamellenblech (1) bei aufeinander gefalteten Abschnitten (1a, 1b) durch Prägung, beispielsweise zick-zack- oder wellenförmig, strukturiert worden ist.

14. Fahrzeugluftreifen mit einem Laufstreifen, welcher mit Einschnitten versehen ist, **dadurch gekennzeichnet, dass** er in einer Form gemäß einem oder mehreren der Ansprüche 1 bis 13 vulkanisiert worden ist.

## Claims

1. Mould with mould components for moulding the profile of the tread of a vehicle pneumatic tyre with sipes by means of lamellar strips (1, 1') which are anchored in the mould components and have at least two strip sections (1a, 1b, 1'a, 1'b, 1'e) which are folded one onto the other and have a corresponding radial extent as far as the inside of the mould and are anchored in the mould by means of attachment sections (1d) at their free end regions, **characterized in that** the sections (1a, 1b, 1'a, 1'b, 1'e) which are folded one onto the other have surfaces of different sizes.

2. Mould according to Claim 1, **characterized in that** the sections (1a, 1b) which are folded one onto the other are made congruent at least in sections.

3. Mould according to Claim 1 or 2, **characterized in that** one section (1a, 1'a) projects with at least one further section (1c, 1'e) over the surface of another section (1b, 1'b) which is folded onto the first section (1a, 1'a).

4. Mould according to Claim 3, **characterized in that** the sections (1a, 1b, 1'a, 1'b, 1'e) which are folded one onto the other and the section/sections (1c, 1'c) which project(s) over said folded sections (1a, 1b, 1'a, 1'b, 1'e) have different radial, and in particular also different axial, extents.

5. Mould according to one of Claims 1 to 4, **characterized in that** lamellar strips (1') are provided with three or more strip sections (1'a, 1'b, 1'e) which are folded one onto the other.

6. Mould according to one of Claims 1 to 5, **characterized in that** lamellar strips (1') are provided which have two or more regions with two or more strip sections (1'a, 1'b, 1'e) which are folded one onto the other.

7. Mould according to Claim 5 or 6, **characterized in that** the folding lines (2', 2") of the strip sections (1'a, 1'b, 1'e) run parallel to one another.

8. Mould according to one of Claims 1 to 7, **characterized in that** at least one of the sections (1a, 1b) which are folded one onto the other has been structured by punching or stamping before the folding operation.

9. Mould according to Claim 8, **characterized in that** the punched portion comprises at least one local depression (3, 6) or at least one groove (5).

10. Mould according to Claim 8, **characterized in that** at least one of the sections (1a, 1b) which are folded one onto the other has been provided with at least one hole (9) or at least one cutout (8).

11. Mould according to one of Claims 8 to 10, **characterized in that** depressions (3, 6) or grooves (5) in the two sections which are folded one onto the other enclose widened portions (4, 7, 11) between them.

12. Mould according to one of Claims 8 to 10, **characterized in that** depressions (3, 3') or grooves in the two sections (1a, 1b) which are folded one onto the other result together in dips or bends in the profile of the lamellar strip (1).

13. Mould according to one of Claims 1 to 7 or 10, **characterized in that**, when the lamellar strip (1) has sections (1a, 1b) which are folded one onto the other, said lamellar strip (1) has been structured by punching, for example in a zigzag shape or corrugated shape.

14. Vehicle pneumatic tyre having a tread which is provided with sipes, **characterized in that** it has been vulcanized in a mould according to one or more of Claims 1 to 13.

## Revendications

1. Moule comprenant des pièces de moulage pour former le profilage de la bande de roulement d'un pneumatique de véhicule comprenant de fines entailles, au moyen de lamelles en tôle (1, 1') fixées dans les pièces de moulage, qui présentent au moins deux portions de tôle pliées l'une sur l'autre (1a, 1b, 1'a, 1'b, 1'e), qui présentent une étendue radiale coïncidant jusqu'au côté interne du moule, et qui sont fixées au moyen de portions de fixation (1d) à leurs parties d'extrémité libre dans le moule,
**caractérisé en ce que**
les portions de tôle pliées l'une sur l'autre (1a, 1b, 1'a, 1'b, 1'e) présentent des surfaces de dimensions différentes.

2. Moule selon la revendication 1, **caractérisé en ce que** les portions de tôle pliées l'une sur l'autre (1a, 1b) sont réalisées au moins en partie en coïncidence.

3. Moule selon la revendication 1 ou 2, **caractérisé en ce que** l'une des portions (1a, 1'a) dépasse avec au moins une autre portion (1c, 1'c) de la surface d'une autre portion (1b, 1'b) pliée pardessus la première portion (1a, 1'a).

4. Moule selon la revendication 3, **caractérisé en ce que** les portions pliées l'une sur l'autre (1a, 1b, 1'a, 1'b, 1'e) et la ou les portions (1c, 1'c) dépassant de celles-ci présentent des étendues radiales différentes, et en particulier aussi des étendues axiales différentes.

5. Moule selon l'une quelconque des revendications 1 à 4, **caractérisé en ce que** des lamelles en tôle (1') avec au moins trois portions de tôle pliées l'une sur l'autre (1'a, 1'b, 1'e) sont prévues.

6. Moule selon l'une quelconque des revendications 1 à 5, **caractérisé en ce que** des lamelles en tôle (1') sont prévues, lesquelles présentent au moins deux régions avec au moins deux portions de tôle pliées l'une sur l'autre (1'a, 1'b, 1'e).

7. Moule selon la revendication 5 ou 6, **caractérisé en ce que** les lignes de pliure (2', 2") des portions de tôle (1'a, 1'b, 1'e) s'étendent parallèlement les unes aux autres.

8. Moule selon l'une quelconque des revendications 1 à 7, **caractérisé en ce qu'**au moins l'une des portions (1a, 1b) pliées l'une sur l'autre a été structurée avant le pliage, par gaufrage ou estampage.

9. Moule selon la revendication 8, **caractérisé en ce que** le gaufrage se compose d'au moins un renfoncement local (3, 6) ou d'au moins une rainure (5).

10. Moule selon la revendication 8, **caractérisé en ce qu'**au moins l'une des portions (1a, 1b) pliées l'une sur l'autre est pourvue d'au moins un trou (9) ou d'un évidement (8).

11. Moule selon l'une quelconque des revendications 8 à 10, **caractérisé en ce que** des renfoncements (3, 6) ou des rainures (5) dans les deux portions pliées l'une sur l'autre forment entre eux des élargissements (4, 7, 11).

12. Moule selon l'une quelconque des revendications 8 à 10, **caractérisé en ce que** des renfoncements (3, 3') ou des rainures dans les deux portions (1a, 1b) pliées l'une sur l'autre produisent conjointement des creux ou des courbures dans l'allure des lamelles en tôle (1).

13. Moule selon l'une quelconque des revendications 1 à 7 ou 10, **caractérisé en ce que** les lamelles en tôle (1) pour les portions (1a, 1b) sont pliées l'une sur l'autre, sont structurées par gaufrage, par exemple en forme de zigzag ou d'ondulation.

14. Pneumatique de véhicule comprenant une bande de roulement, qui est pourvue d'entailles, **caractérisé en ce qu'**il est vulcanisé dans un moule selon l'une quelconque ou plusieurs des revendications 1 à 13.
